(19) Europäisches Patentamt
European Patent Office
Office européen des brevets

(11) **EP 3 239 249 B1**

(12) **EUROPEAN PATENT SPECIFICATION**

(45) Date of publication and mention
of the grant of the patent:
**05.02.2020 Bulletin 2020/06**

(21) Application number: **15872829.5**

(22) Date of filing: **15.12.2015**

(51) Int Cl.:
*C08L 57/00* (2006.01)　　*C09D 133/06* (2006.01)
*C08F 220/20* (2006.01)　　*C09D 135/02* (2006.01)
*C09D 11/322* (2014.01)　　*C09B 67/04* (2006.01)
*C08J 3/12* (2006.01)　　*C09B 67/08* (2006.01)
*C09B 67/10* (2006.01)　　*C09B 67/20* (2006.01)
*C09B 67/00* (2006.01)

(86) International application number:
**PCT/JP2015/085118**

(87) International publication number:
**WO 2016/104260 (30.06.2016 Gazette 2016/26)**

(54) **METHOD FOR PRODUCING FINE ORGANIC PIGMENT**

VERFAHREN ZUR HERSTELLUNG VON FEINEN ORGANISCHEN PIGMENTS

PROCÉDÉ DE PRODUCTION D'UN FIN PIGMENT ORGANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2014 JP 2014266649**

(43) Date of publication of application:
**01.11.2017 Bulletin 2017/44**

(73) Proprietor: **Kao Corporation**
**Tokyo 103-8210 (JP)**

(72) Inventors:
• **OZAKI, Yuki**
**Wakayama-shi**
**Wakayama 640-8580 (JP)**
• **UEDA, Yasufumi**
**Wakayama-shi**
**Wakayama 640-8580 (JP)**
• **SATO, Takahiro**
**Wakayama-shi**
**Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
WO-A1-2014/185471　　WO-A1-2014/185473
WO-A1-2014/185475　　JP-A- 2008 050 588
JP-A- 2008 304 521　　JP-A- 2009 161 690
JP-A- 2009 275 125　　JP-A- 2011 052 174
JP-A- 2012 025 890　　JP-A- 2012 025 920
US-A1- 2006 052 480　　US-A1- 2012 165 437

**Description**

FIELD OF THE INVENTION

The present invention relates to a process for producing a fine organic pigment.

BACKGROUND OF THE INVENTION

In ink-jet printing methods, droplets of ink are projected onto a recording member from very fine nozzles and allowed to adhere to the recording member to obtain printed matters on which characters, images, etc., are printed. The printed matters are required to have high optical density and gloss, whereas the inks for ink-jet printing are required to have high ejection properties. In addition, color filters for liquid crystal displays are required to exhibit high contrast ratio and brightness.

Therefore, as the pigments used in the inks for ink-jet printing and color filters, there is a demand for finely atomized pigments having a very small primary particle size.

As the method of obtaining a fine organic pigment by reducing a primary particle size of a crude pigment, there are extensively used wet kneading and milling methods such as solvent salt milling, dry milling methods, etc. The solvent salt milling means a milling method of atomizing a powder, etc., by a wet kneading method using a water-soluble inorganic salt as pulverization media. For example, by kneading a wet viscous material including the crude pigment, the water-soluble inorganic salt and a water-soluble organic solvent, it is possible to pulverize the pigment and reduce a primary particle size of the pigment.

JP 2009-256615A (Patent Literature 1) discloses a process for producing a fine organic pigment by kneading a mixture of a raw material organic pigment, a water-soluble inorganic salt, a water-soluble organic solvent and a resin by a solvent salt milling method, in which the resin contains an amino group and/or a quaternary ammonium salt group.

JP 2009-84302A (Patent Literature 2) discloses a process for producing a processed pigment having excellent dispersibility and dispersion stability by kneading a raw material organic pigment, a water-soluble inorganic salt, a water-soluble organic solvent ad a graft-type high-molecular compound by a solvent salt milling method.

WO 2014/185471 (see also EP 2998364 A1) describes a method for producing a fine organic pigment including a step (1) in which an organic pigment starting material, a water-soluble inorganic salt, a water-soluble organic solvent, and at least 0.6 but not more than 4.0 parts by mass of water per 100 parts by mass of the water-soluble inorganic salt are mixed, and the resultant mixture is kneaded.

WO 2014/185473 (see also EP 2998365 A1) describes a method for producing a fine organic pigment including a step (1) in which (A) an organic pigment starting material having, in molecules thereof, oxygen, and nitrogen bonded to hydrogen, (B) a water-soluble inorganic salt, (C) a water-soluble organic solvent, (D) at least 0.6 but not more than 7.0 parts by mass of water per 100 parts by mass of the water-soluble inorganic salt, and (E) at least 1.5 but not more than 35 parts by mass of a water-soluble basic compound per 100 parts by mass of the organic pigment starting material are mixed, and the resultant mixture is kneaded.

US 2006/0052480 describes a water dispersion containing colorant-containing water-insoluble vinyl polymer particles, as well as a water-based ink containing the water dispersion. The water-insoluble vinyl polymer is a polymer containing carboxyl acid and alkoxy-carboxyl acid constitutional units.

WO 2014/185475 (see also US 2016/090483) describes a method for producing a fine organic pigment including a step (1) in which a raw organic pigment, a water-soluble inorganic salt, a water-soluble organic solvent, and 0.8-18.0 parts by mass of a compound that is represented by formula (1) with respect to 100 parts by mass of the raw organic pigment are blended and the mixture thus obtained is mixed; and a step (2) in which the mixture obtained at step (1) is washed using an aqueous solvent and filtered.

JP 2012-025890 describes a method for producing a fine organic pigment including a first step of making a kneaded composition by continuously kneading a mixture of organic pigment, a water-soluble inorganic salt and a water-soluble organic solvent using a continuous kneading machine; and a second step of making fine organic pigment by dissolving the water-soluble inorganic salt and the water-soluble organic solvent of the kneaded composition made in the first step into water to remove those.

JP 2012-25920 describes a method for producing a fine organic pigment including a fining step that is performed under coexistence of an alkaline material.

US 2012/0165437 describes an aqueous pigment dispersion containing an azo pigment a vinyl polymer containing a specific structural.

SUMMARY OF THE INVENTION

The present invention relates to a process for producing a fine organic pigment including the step of kneading a mixture prepared by compounding a raw material organic pigment, a water-soluble inorganic salt in the form of particles, a water-soluble organic solvent and a resin, in which the resin is a copolymer produced by copolymerizing an aromatic ring-containing ethylenically unsaturated monomer (A) (hereinafter also referred to merely as a "monomer (A)"), a carboxy group-containing ethylenically unsaturated monomer (B) (hereinafter also referred to merely as a "monomer (B)") and an ethylenically unsaturated monomer (C) containing a polyethyleneoxide chain having an average molar number of addition of ethyleneoxide of not less than 1 and not more than 50 (hereinafter also referred to merely as a "monomer (C)").

## DETAILED DESCRIPTION OF THE INVENTION

The wet kneading method such as typically solvent salt milling is a useful method for pulverizing a pigment. As a primary particle size of the obtained organic pigment is reduced, it is possible to more efficiently improve performances or characteristics of an ink for ink-jet printing or a color filter using the organic pigment. For this reason, it has been demanded to provide a method for producing an organic pigment having a much smaller primary particle size. However, in order to obtain a fully atomized pigment, it is necessary to knead the pigment for a long period of time, thereby causing the problem of poor productivity. Therefore, it has been required to develop a method capable of efficiently atomizing a raw material organic pigment for a short period of time.

In the processes described in Patent Literatures 1 and 2, although the pigment obtained by adding the resin during the solvent salt milling has a small primary particle size, the kneading step still requires a prolonged time, and the degree of atomization of the pigment in the case where the pigment is atomized merely for a short period of time is still insufficient.

The present invention relates to a process for producing a fine organic pigment which is capable of efficiently atomizing a raw material organic pigment and is excellent in productivity.

The present inventors have found that by kneading a mixture prepared by compounding a raw material organic pigment, a water-soluble inorganic salt in the form of particles, a water-soluble organic solvent and a specific resin, it is possible to efficiently atomize the raw material organic pigment.

That is, the present invention relates to a process for producing a fine organic pigment including the step of kneading a mixture prepared by compounding a raw material organic pigment, a water-soluble inorganic salt in the form of particles, a water-soluble organic solvent and a resin, in which the resin is a copolymer produced by copolymerizing an aromatic ring-containing ethylenically unsaturated monomer (A), a carboxy group-containing ethylenically unsaturated monomer (B) and an ethylenically unsaturated monomer (C) containing a polyethyleneoxide chain having an average molar number of addition of ethyleneoxide of not less than 1 and not more than 50.

In accordance with the present invention, since the raw material organic pigment can be atomized efficiently, it is possible to provide a process for producing a fine organic pigment with excellent productivity. The fine organic pigment obtained by the production process of the present invention may be suitably used in the applications such as an ink for ink-jet printing or a color filter as well as in the other applications than those for ink-jet printing such as printing inks, paints, colored resin molded articles, toners for development of electrostatic charge images, etc.

<Process for Producing Fine Organic Pigment>

The present invention relates to a process for producing a fine organic pigment including the step of kneading a mixture prepared by compounding a raw material organic pigment, a water-soluble inorganic salt in the form of particles, a water-soluble organic solvent and a resin, in which the resin is a copolymer produced by copolymerizing an aromatic ring-containing ethylenically unsaturated monomer (A) (hereinafter also referred to merely as a "monomer (A)"), a carboxy group-containing ethylenically unsaturated monomer (B) (hereinafter also referred to merely as a "monomer (B)") and an ethylenically unsaturated monomer (C) containing a polyethyleneoxide chain having an average molar number of addition of ethyleneoxide of not less than 1 and not more than 50 (hereinafter also referred to merely as a "monomer (C)").

According to the production process of the present invention, by kneading a mixture prepared by compounding a raw material organic pigment, a water-soluble inorganic salt in the form of particles, a water-soluble organic solvent and a specific resin, it is possible to efficiently atomize the raw material organic pigment. The reason why the aforementioned advantageous effects can be achieved by the present invention is considered as follows, though it is not clearly determined yet.

That is, the monomer (A) used in the polymerization for production of the resin used in the production process of the present invention is considered to be insoluble in the water-soluble organic solvent, and therefore efficiently acts for adsorbing the resin onto the surface of the pigment particles. Also, the monomer (B) and the monomer (C) are monomers having high compatibility with the water-soluble organic solvent. In addition, it is considered that owing to electric charge repulsion by the carboxy group of the monomer (B) and steric repulsion by the polyethyleneoxide chain of the monomer (C), the monomer (B) and the monomer (C) respectively act for dispersing the pigment particles after adsorption of the resin onto the pigment particles, suppressing aggregation of the pigment particles, allowing pulverization of the pigment particles by the water-soluble inorganic salt to proceed efficiently, and thereby promoting atomization of the pigment particles. Furthermore, it is considered that since the average molar number of addition of ethyleneoxide in the polyethyleneoxide chain of the monomer (C) is not more than 50, occurrence of more than necessary spreading of the polyethyleneoxide chain is suppressed, and the volume occupied by molecules of the resin is reduced, so that the resin can be readily penetrated into spaces between the aggregated pigment particles, and the pigment particles can be dispersed efficiently.

[Raw material Organic Pigment]

The raw material organic pigment used in the present invention means an organic pigment before being kneaded.

Examples of the preferred raw material organic pigment include at least one pigment selected from the group consisting of condensed polycyclic pigments such as anthraquinone pigments, quinacridone pigments, indigo pigments, dioxazine pigments, perylene pigments, perinone pigments, isoindolinone pigments, isoindoline pigments, quinophthalone pigments and diketopyrrolopyrrole pigments, and azo pigments such as disazo pigments, benzimidazolone pigments and condensed azo pigments. Of these organic pigments, from the viewpoint of improving pulverization efficiency of the pigment and enhancing usefulness of the resulting fine organic pigment, more preferred is at least one pigment selected from the group consisting of quinacridone pigments, diketopyrrolopyrrole pigments, disazo pigments and benzimidazolone pigments, and even more preferred are quinacridone pigments.

Specific examples of the quinacridone pigments include unsubstituted quinacridone pigments such as C.I. Pigment Violet 19; dimethyl quinacridone pigments such as C.I. Pigment Red 122; dichloroquinacridone pigments such as C.I. Pigment Red 202 and C.I. Pigment Red 209; a pigment mixture of at least two pigments selected from the group consisting of the aforementioned pigments; and a solid solution of quinacridone pigments or a solid solution of a quinacridone pigment with the other pigment.

Examples of the solid solution include quinacridone solid solutions such as C.I. Pigment Violet 42; solid solutions of quinacridone quinone and unsubstituted quinacridone such as C.I. Pigment Red 206, C.I. Pigment Orange 48 and C.I. Pigment Orange 49; and solid solutions of dichloroquinacridone and unsubstituted quinacridone such as C.I. Pigment Red 207. Examples of commercially available products of the solid solution include "CROMOPHTAL Jet 2BC" (quinacridone solid solution) available from Ciba Specialty Chemicals Inc. and "FASTGEN SUPER MAGENTA RY" (quinacridone solid solution) available from DIC Corporation.

Among these quinacridone pigments, from the viewpoint of improving pulverization efficiency of the pigment and enhancing usefulness of the fine organic pigment, preferred is C.I. Pigment Red 122 (hereinafter also referred to merely as "PR122"). Suitable examples of commercially available products of the PR122 include "CFR002" available from Dainichiseika Color & Chemicals Mfg. Co., Ltd.

The primary particle size of the raw material organic pigment is preferably not more than 500 nm, more preferably not more than 300 nm and even more preferably not more than 150 nm, and is also preferably not less than 50 nm, more preferably not less than 60 nm and even more preferably not less than 70 nm, from the viewpoint of improving pulverization efficiency as well as availability and cost efficiency. Meanwhile, the primary particle size of the raw material organic pigment is a number-average value measured by the method described in Examples below.

The raw material organic pigment may also contain various pigment derivatives. The pigment derivatives are in the form of a compound formed by introducing various substituent groups having a specific structure into a skeleton of the pigment. Examples of the substituent group contained in the pigment derivatives include a hydroxy group, a carboxy group, a carbamoyl group, a sulfonic group, a sulfonamide group and a phthalimidomethyl group.

The pigment derivatives also include aromatic polycyclic compounds such as naphthalene compounds and anthraquinone compounds, which generally have no unit structure as an organic pigment. Of these pigment derivatives, preferred are derivatives of the same raw material organic pigments as illustrated above. These pigment derivatives may be used alone or in the form of a mixture of any two or more thereof.

In the case where the raw material organic pigment contains the pigment derivatives, the content of the pigment derivatives in the raw material organic pigment is preferably not less than 0.05% by mass and more preferably not less than 0.1% by mass from the viewpoint of improving dispersibility of the pigment and efficiently atomizing the pigment, and is also preferably not more than 5% by mass, more preferably not more than 1% by mass and even more preferably not more than 0.2% by mass from the viewpoint of suppressing variation in hue of the pigment. Further, from the viewpoint of suppressing variation in hue of the pigment and efficiently atomizing the pigment particles, the raw material organic pigment preferably contains substantially no pigment derivatives.

[Water-Soluble Inorganic Salt]

In the present invention, the water-soluble inorganic salt that is compounded in the mixture to be kneaded is preferably a metal salt, more preferably at least one salt selected from the group consisting of a metal chloride and a metal sulfate, even more preferably a metal chloride, further even more preferably at least one salt selected from the group consisting of an alkali metal chloride and an alkali earth metal chloride and still further even more preferably an alkali metal chloride, from the viewpoint of improving pulverization efficiency. The metal of the metal salt is preferably at least one metal selected from the group consisting of an alkali metal and an alkali earth metal, more preferably at least one metal selected from the group consisting of sodium, potassium and magnesium and even more preferably sodium from the viewpoint of improving cost efficiency. From the viewpoint of improving cost efficiency, the water-soluble inorganic salt is preferably at least one compound selected from the group consisting of sodium chloride, potassium chloride, sodium sulfate, zinc chloride, calcium chloride and magnesium chloride, more preferably at least one compound selected from the group consisting of sodium chloride and sodium sulfate and even more preferably sodium chloride.

These water-soluble inorganic salts may be used alone or in the form of a mixture of any two or more thereof.

The solubility of the water-soluble inorganic salt in 100 g of water as measured at 20°C is preferably not less than 10 g, more preferably not less than 20 g, and even more preferably not less than 30 g, from the viewpoint of facilitating removal of the water-soluble inorganic salt from the mixture obtained though the kneading step, and is also preferably not more than 100 g, more preferably not more than 60 g and even more preferably not more than 40 g, from the viewpoint of improving pulverization efficiency.

The water-soluble inorganic salt is preferably hardly soluble in the water-soluble organic solvent, and more preferably substantially insoluble in the water-soluble organic solvent. The solubility of the water-soluble inorganic salt in 100 g of the water-soluble organic solvent as measured at 20°C is preferably not more than 10 g, more preferably not more than 5 g and even more preferably not more than 1 g from the viewpoint of enhancing productivity of the fine organic pigment.

The water-soluble inorganic salt is in the form of particles from the viewpoint of improving handling properties thereof. The average particle size of the water-soluble inorganic salt is preferably not more than 200 $\mu$m, more preferably not more than 50 $\mu$m and even more preferably not more than 20 $\mu$m from the viewpoint of improving pulverization efficiency, and is also preferably not less than 0.1 $\mu$m, more preferably not less than 1 $\mu$m and even more preferably not less than 5 $\mu$m from the viewpoint of enhancing productivity of the fine organic pigment.

[Water-Soluble Organic Solvent]

In the present invention, the water-soluble organic solvent compounded in the mixture to be kneaded is preferably an organic solvent that is miscible with water at an optional ratio, from the viewpoint of facilitating removal of the water-soluble organic solvent from the mixture obtained though the kneading step.

The water-soluble organic solvent is preferably in the form of an aliphatic compound containing an alcoholic hydroxy group from the viewpoint of improving safety and cost efficiency. The number of the alcoholic hydroxy groups contained in the aliphatic compound as the water-soluble organic solvent is preferably not less than 1 and more preferably not less than 2 from the viewpoint of improving water solubility and workability, and is also preferably not more than 3 and more preferably 2 from the viewpoint of improving handling properties and cost efficiency. In addition, the water-soluble organic solvent preferably contains an ether bond from the viewpoint of improving availability and safety. The number of the ether bonds contained in the water-soluble organic solvent is preferably not more than 3, more preferably not more than 2 and even more preferably 1 from the viewpoint of improving handling properties and cost efficiency.

Examples of the water-soluble organic solvent include ethylene glycol, diethylene glycol, diethylene glycol monoalkyl ethers, triethylene glycol, triethylene glycol monoalkyl ethers, polyethylene glycol, propylene glycol, dipropylene glycol, dipropylene glycol monoalkyl ethers, polypropylene glycol, 2-propanol, 1-propanol, isobutyl alcohol, 1-butanol, isopentyl alcohol, 1-pentanol, isohexyl alcohol, 1-hexanol, glycerin and mixtures of these solvents. Of these water-soluble organic solvents, from the viewpoint of improving safety and cost efficiency, preferred is at least one solvent selected from the group consisting of diethylene glycol, propylene glycol, triethylene glycol and polyethylene glycol, and more preferred is diethylene glycol.

These water-soluble organic solvents may be used alone or in the form of a mixture of any two or more thereof.

The boiling point of the water-soluble organic solvent is preferably not lower than 100°C and more preferably not lower than 200°C from the viewpoint of improving safety and suppressing evaporation of the organic solvent upon kneading, and is also preferably not higher than 400°C and more preferably not higher than 300°C from the viewpoint of improving availability thereof. In addition, the solidification point of the water-soluble organic solvent is preferably not higher than 25°C and more preferably not higher than 0°C from the viewpoint of improving workability, and is also preferably not lower than -50°C and more preferably not lower than -20°C from the viewpoint of improving availability thereof.

[Resin]

In the present invention, the resin compounded in the mixture to be kneaded is in the form of a copolymer produced by copolymerizing an aromatic ring-containing ethylenically unsaturated monomer (A), a carboxy group-containing ethylenically unsaturated monomer (B) and an ethylenically unsaturated monomer (C) containing a polyethyleneoxide chain having an average molar number of addition of ethyleneoxide of not less than 1 and not more than 50.

[Monomer (A)]

The monomer (A) is in the form of an aromatic ring-containing ethylenically unsaturated monomer. It is considered that the monomer (A) efficiently acts for adsorption of the resin on the surface of the pigment particles.

The monomer (A) is preferably at least one monomer selected from the group consisting of phenoxyethyl (meth)acrylate, benzyl (meth)acrylate and styrene-based monomers such as styrene, $\alpha$-methyl styrene and vinyl toluene. Of these monomers, from the viewpoint of improving adsorption of the resin to the pigment, the monomer (A) is more preferably at least one monomer selected from the group consisting of styrene and benzyl (meth)acrylate, and from the viewpoint of improving solubility of the resin in the water-soluble organic solvent, the monomer (A) is even more preferably benzyl (meth)acrylate.

The term "(meth)acrylate" as used in the present specification means at least one compound selected from the group consisting of an acrylate and a methacrylate.

The content of the monomer (A) in whole monomers used in the copolymerization for production of the resin is preferably not less than 10% by mass, more preferably not less than 30% by mass, even more preferably not less than 40% by mass, further even more preferably not less than 45% by mass and still further even more preferably not less than 50% by mass from the viewpoint of improving adsorption of the resin to the pigment, and is also preferably not more than 90% by mass, more preferably not more than 70% by mass, even more preferably not more than 65% by mass, further even more preferably not more than 60% by mass and still further even more preferably not more than 55% by mass from the viewpoint of improving solubility of the resin in the water-soluble organic solvent.

[Monomer (B)]

The monomer (B) is in the form of a carboxy group-containing ethylenically unsaturated monomer. It is considered that the monomer (B) acts for dispersing the pigment particles after adsorption of the resin onto the pigment particles and suppressing aggregation of the pigment particles owing to electric charge repulsion by the carboxy group contained therein, thereby contributing to atomization of the pigment particles.

The monomer (B) is preferably at least one monomer selected from the group consisting of acrylic acid, methacrylic acid, itaconic acid, crotonic acid, isocrotonic acid and maleic acid from the viewpoint of improving dispersibility of the pigment. Of these monomers, from the viewpoint of facilitating production thereof, more preferred is at least one monomer selected from the group consisting of acrylic acid and methacrylic acid, and even more preferred is methacrylic acid.

The content of the monomer (B) in whole monomers used in the copolymerization for production of the resin is preferably not less than 5% by mass, more preferably not less than 10% by mass, even more preferably not less than 15% by mass and further even more preferably not less than 20% by mass from the viewpoint of improving dispersibility of the pigment, and is also preferably not more than 45% by mass, more preferably not more than 40% by mass, even more preferably not more than 35% by mass, further even more preferably not more than 30% by mass and still further even more preferably not more than 25% by mass from the viewpoint of improving adsorption of the resin to the pigment.

[Monomer (C)]

The monomer (C) is in the form of an ethylenically unsaturated monomer containing a polyethyleneoxide chain in which an average molar number of addition of ethyleneoxide (hereinafter also referred to merely as "EO") is not less than 1 and not more than 50. It is considered that the monomer (C) acts for dispersing the pigment particles after adsorption of the resin onto the pigment particles and suppressing aggregation of the pigment particles owing to steric repulsion by the polyethyleneoxide chain contained therein to thereby contribute to atomization of the pigment particles.

Examples of the monomer (C) include polyoxyethylene (meth)acrylate, alkoxy polyoxyethylene (meth)acrylates and ethyleneoxide adducts of allyl alcohol.

The average molar number of addition of EO in the monomer (C) is not more than 50, preferably not more than 45, more preferably not more than 25, even more preferably not more than 10 and further even more preferably not more than 6, and is also not less than 1, preferably not less than 2 and more preferably not less than 3, from the viewpoint of atomizing the pigment.

The average molar number of addition of EO in the monomer (C) (hereinafter also referred to merely as a "molar number of addition of EO") may be determined by a proton nuclear magnetic resonance ($^1$H-NMR) spectrum.

For example, the molar number of addition of EO in an alkoxy polyethylene glycol methacrylate may be determined as follows. That is, using an NMR Spectrometer "Mercury 400 Model" available from Varian Inc., a solution prepared by dissolving 0.01 g of the alkoxy polyethylene glycol methacrylate in 0.99 g of deuterated chloroform is subjected to measurement of a proton nuclear magnetic resonance ($^1$H-NMR) spectrum thereof (measuring conditions: non-decoupling method; relaxation time: 10 seconds; cumulative number: 32 times). The molar number of addition of EO in the alkoxy polyethylene glycol methacrylate is calculated according to the following formula.

$$\text{Molar number of addition of EO} = (\text{integrated value of signal derived from methylene group of polyoxyethylene})/\{(\text{integrated value of signal derived from vinylidene group}) \times 2\}$$

The monomer (C) is preferably a monomer represented by the following formula (1)

$$CH_2=C(R^1)\text{-}COO\text{-}(CH_2CH_2O)_n\text{-}R^2 \qquad (1)$$

wherein $R^1$ is a hydrogen atom or a methyl group; $R^2$ is a hydrogen atom, an alkyl group having not less than 1 and not more than 20 carbon atoms or a phenyl group; and n represents an average molar number of addition of ethyleneoxide and is a number of not less than 1 and not more than 50.

In the formula (1), $R^1$ is a hydrogen atom or a methyl group, and from the viewpoint of improving availability of the monomer, preferred is a methyl group.

In the formula (1), $R^2$ is a hydrogen atom, an alkyl group having not less than 1 and not more than 20 carbon atoms or a phenyl group, and from the viewpoint of improving solubility of the resin in the water-soluble organic solvent, preferred is an alkyl group having not less than 1 and not more than 20 carbon atoms, more preferred is an alkyl group having not less than 1 and not more than 16 carbon atoms, even more preferred is an alkyl group having not less than 1 and not more than 8 carbon atoms, further even more preferred is a 2-ethylhexyl group or a methyl group, and still further even more preferred is a methyl group.

In the formula (1), from the viewpoint of atomizing the pigment, n is not more than 50, preferably not more than 45, more preferably not more than 25, even more preferably not more than 10 and further even more preferably not more than 6, and is also not less than 1, preferably not less than 2 and more preferably not less than 3.

The monomer (C) represented by the formula (1) is preferably at least one monomer selected from the group consisting of polyethylene glycol mono(meth)acrylate, methoxypolyethylene glycol mono(meth)acrylate, ethoxypolyethylene glycol mono(meth)acrylate, propoxypolyethylene glycol mono(meth)acrylate, butoxypolyethylene glycol mono(meth)acrylate, octoxypolyethylene glycol mono(meth)acrylate, stearoxypolyethylene glycol mono(meth)acrylate and phenoxypolyethylene glycol mono(meth)acrylate, more preferably at least one monomer selected from the group consisting of methoxypolyethylene glycol mono(meth)acrylate, ethoxypolyethylene glycol mono(meth)acrylate, propoxypolyethylene glycol mono(meth)acrylate, butoxypolyethylene glycol mono(meth)acrylate, octoxypolyethylene glycol mono(meth)acrylate and phenoxypolyethylene glycol mono(meth)acrylate, even more preferably at least one monomer selected from the group consisting of methoxypolyethylene glycol mono(meth)acrylate and ethoxypolyethylene glycol mono(meth)acrylate, and further even more preferably methoxypolyethylene glycol mono(meth)acrylate.

Typical examples of commercially available products of the monomer (C) include "NK ESTER M-20G", "NK ESTER M-40G", "NK ESTER M-90G", "NK ESTER M-230G", "NK ESTER M-450G" and "NK ESTER EH-4E" all available from Shin-Nakamura Chemical Co., Ltd., etc.

The content of the monomer (C) in whole monomers used in the copolymerization for production of the resin is preferably not less than 5% by mass, more preferably not less than 10% by mass, even more preferably not less than 15% by mass and further even more preferably not less than 20% by mass from the viewpoint of improving dispersion stability of the pigment, and is also preferably not more than 45% by mass, more preferably not more than 40% by mass, even more preferably not more than 35% by mass and further even more preferably not more than 30% by mass from the viewpoint of improving viscosity of the mixture upon kneading.

In the resin used in the present invention, from the viewpoint of atomizing the pigment, the content of the monomer (A) in whole monomers used in the copolymerization for production of the resin is preferably not less than 10% by mass and not more than 90% by mass, the content of the monomer (B) in whole monomers used in the copolymerization for production of the resin is preferably not less than 5% by mass and not more than 45% by mass, and the content of the monomer (C) in whole monomers used in the copolymerization for production of the resin is preferably not less than 5% by mass and not more than 45% by mass.

The resin used in the present invention may be produced by copolymerizing the monomers by known polymerization methods. As the polymerization method, preferred is a solution polymerization. The solvent used in the solution polymerization method is not particularly limited, and is preferably a polar organic solvent such as aliphatic alcohols having not less than 1 and not more than 3 carbon atoms, ketones, ethers and esters, more preferably at least one solvent selected from the group consisting of methanol, ethanol, acetone and methyl ethyl ketone, and even more preferably methyl ethyl ketone. The polymerization may be carried out in the presence of a polymerization initiator or a chain transfer agent. The polymerization initiator is preferably an azo compound, and more preferably 2,2'-azobis(2,4-dimethylvaleronitrile), and the chain transfer agent is preferably mercaptans, and more preferably 2-mercapto ethanol.

The preferred polymerization conditions may vary depending upon the kinds of polymerization initiator, monomers, solvent, etc., to be used. The polymerization temperature is preferably not lower than 50°C and not higher than 80°C, and the polymerization time is preferably not less than 1 hour and not more than 20 hours. The polymerization is preferably conducted in a nitrogen gas atmosphere or an atmosphere of an inert gas such as argon.

After completion of the polymerization reaction, the polymer thus produced may be isolated from the reaction solution by a known method such as reprecipitation, removal of solvent by distillation or the like. The thus obtained polymer may be subjected to reprecipitation, membrane separation, chromatography, extraction, etc., for removing unreacted monomers, etc., therefrom.

The contents of constitutional units derived from the monomer (A), monomer (B) and monomer (C) in the resin are the same as the preferred contents of the monomer (A), monomer (B) and monomer (C) in whole monomers used in the copolymerization for production of the resin, respectively.

The acid value of the resin used in the present invention is preferably not less than 50 mgKOH/g, more preferably not less than 70 mgKOH/g and even more preferably not less than 90 mgKOH/g from the viewpoint of improving solubility of the resin in the water-soluble organic solvent, and is also preferably not more than 300 mgKOH/g, more preferably not more than 250 mgKOH/g, even more preferably not more than 200 mgKOH/g and further even more preferably not more than 180 mgKOH/g from the viewpoint of improving adsorption of the resin onto the pigment. Meanwhile, the acid value of the resin may be calculated from the ratio between the monomer components used upon production of the resin.

The weight-average molecular weight of the resin used in the present invention is preferably not less than 1,000, more preferably not less than 5,000, even more preferably not less than 10,000 and further even more preferably not less than 30,000 from the viewpoint of improving adsorption of the resin onto the pigment, and is also preferably not more than 100,000, more preferably not more than 80,000 and even more preferably not more than 60,000 from the viewpoint of improving solubility of the resin in the water-soluble organic solvent. Meanwhile, the weight-average molecular weight of the resin may be measured by the method described in Examples below.

[Kneading Step]

The production process of the present invention includes the step of kneading a mixture prepared by compounding the raw material organic pigment, the water-soluble inorganic salt in the form of particles, the water-soluble organic solvent and the resin with each other (hereinafter also referred to merely as a "kneading step"). More specifically, the mixture prepared by compounding the raw material organic pigment, the water-soluble inorganic salt in the form of particles, the water-soluble organic solvent and the resin with each other is mechanically kneaded using a kneading machine such as a kneader. In the kneading step, from the viewpoint of improving uniformity of the kneaded material upon adding the resin, it is preferred that after kneading the raw material organic pigment, the water-soluble inorganic salt in the form of particles and the water-soluble organic solvent, the resin is added to the resulting kneaded material, followed by kneading the obtained mixture. The mixture obtained via the kneading step (hereinafter also referred to as a "mixture after the kneading") contains a fine organic pigment obtained by atomizing the raw material organic pigment.

The kneading step may be carried out using various kneading devices such as a batch type kneader or a continuous type kneader, or a kneader of a normal pressure type, an applied pressure type or a reduced pressure type. Examples of the kneading devices include roll mills such as a twin roll mill, a triple roll mill and a multiple roll mill; extruders such as a single-screw extruder and a twin-screw extruder; and stirring type kneaders such as a planetary mixer. As the stirring type kneaders, there may be mentioned "TRIMIX" available from INOUE MFG., INC., and the like. Also, as the extruders, there may be mentioned "KRC Kneader" available from Kurimoto Ltd., "MIRACLE K.C.K." available from Asada Iron Works Co., Ltd., and the like.

The temperature of the mixture upon kneading is preferably not higher than 120°C, more preferably not higher than 100°C, even more preferably not higher than 80°C and further even more preferably not higher than 60°C from the viewpoint of improving pulverization efficiency and suppressing evaporation of water, and is also preferably not lower than 20°C, and more preferably not lower than 40°C from the viewpoint of reducing load for cooling.

The time of the kneading step is preferably not less than 0.5 hour, more preferably not less than 1 hour and even more preferably not less than 1.5 hours from the viewpoint of atomizing the pigment, and is also preferably not more than 15 hours, more preferably not more than 10 hours, even more preferably not more than 5 hours and further even more preferably not more than 3 hours from the viewpoint of enhancing productivity of the fine organic pigment.

In the case where the kneading step is the step in which after kneading the raw material organic pigment, the water-soluble inorganic salt in the form of particles and the water-soluble organic solvent with each other, the resin is added to the resulting kneaded material, followed by kneading the obtained mixture, the kneading time before adding the resin is preferably not less than 0.1 hour and more preferably not less than 0.3 hour from the viewpoint of improving uniformity of the kneaded material upon adding the resin, and is also preferably not more than 5 hours, more preferably not more than 3 hours and even more preferably not more than 1 hour from the viewpoint of enhancing productivity of the fine organic pigment. On the other hand, the kneading time after adding the resin is preferably not less than 0.4 hour and more preferably not less than 0.7 hour from the viewpoint of improving uniformity of the resulting mixture after the kneading, and is also preferably not more than 10 hours, more preferably not more than 7 hours, even more preferably not more than 4 hours and further even more preferably not more than 2 hours from the viewpoint of enhancing productivity of the fine organic pigment.

The amount of the water-soluble inorganic salt compounded in the mixture to be kneaded is preferably not less than 100 parts by mass, more preferably not less than 300 parts by mass and even more preferably not less than 400 parts by mass on the basis of 100 parts by mass of the raw material organic pigment from the viewpoint of improving pulverization efficiency, and is also preferably not more than 3000 parts by mass, more preferably not more than 1000 parts by mass, even more preferably not more than 800 parts by mass and further even more preferably not more than 600 parts by mass on the basis of 100 parts by mass of the raw material organic pigment from the viewpoint of enhancing productivity of the fine organic pigment.

The amount of the water-soluble organic solvent compounded in the mixture to be kneaded is preferably not less than 10 parts by mass, more preferably not less than 50 parts by mass and even more preferably not less than 100 parts by mass on the basis of 100 parts by mass of the raw material organic pigment from the viewpoint of improving pulverization efficiency, and is also preferably not more than 500 parts by mass, more preferably not more than 300 parts by mass, even more preferably not more than 200 parts by mass and further even more preferably not more than 150 parts by mass on the basis of 100 parts by mass of the raw material organic pigment from the viewpoint of enhancing productivity of the fine organic pigment.

The amount of the resin compounded in the mixture to be kneaded is preferably not less than 1 parts by mass, more preferably not less than 3 parts by mass, even more preferably not less than 5 parts by mass and further even more preferably not less than 7 parts by mass on the basis of 100 parts by mass of the raw material organic pigment from the viewpoint of suppressing aggregation of the pigment, and is also preferably not more than 80 parts by mass, more preferably not more than 60 parts by mass, even more preferably not more than 40 parts by mass, further even more preferably not more than 20 parts by mass and still further even more preferably not more than 10 parts by mass on the basis of 100 parts by mass of the raw material organic pigment from the viewpoint of improving viscosity of the mixture to be kneaded.

[Washing Step]

From the viewpoint of facilitating removal of the water-soluble inorganic salt and the water-soluble organic solvent from the aforementioned mixture after the kneading, the production process of the present invention preferably includes the step of subjecting the mixture after the kneading to washing treatment with an aqueous solvent and then to filtration (hereinafter also referred to as a "washing step"). The washing step may be performed, for example, by the following method.

That is, the mixture after the kneading is stirred and mixed with an aqueous solvent such as water which is used in an amount enough to dissolve the water-soluble inorganic salt and water-soluble organic solvent contained in the mixture after the kneading, thereby obtaining a dispersion of the pigment. Next, the resulting dispersion is subjected to filtration, and then the obtained wet cake is washed with the aqueous solvent to thereby obtain a paste of a fine organic pigment from which the water-soluble inorganic salt and the water-soluble organic solvent are removed (hereinafter also referred to merely as a "pigment paste").

The filtration in the washing step may be carried out, for example, using a filter press. As the commercially available filter press, there may be mentioned a Yabuta-type filter press "ROUND TESTER YTO-8 Model" available from Yabuta Kikai Co., Ltd., and a closed-type automatic continuously pressurized filtration system "Rotary Filter" available from Kotobuki Industries Co., Ltd. The pressure applied upon the filtration is, for example, not less than 0.1 MPa and not more than 1 MPa.

The aqueous solvent used in the washing step is preferably water, and more preferably at least one water selected from the group consisting of tap water, ion-exchanged water, distilled water, groundwater and a mineral acid aqueous solution from the viewpoint of attaining good washability. The aqueous solvent used in the washing step is even more preferably ion-exchanged water from the viewpoint of maintaining good quality of the resulting fine organic pigment, and further even more preferably groundwater from the viewpoint of improving cost efficiency.

The pigment paste obtained through the washing step may be further subjected to drying and pulverization.

[Fine Organic Pigment]

The primary particle size of the fine organic pigment obtained by the production process of the present invention may vary depending upon the kind and applications of the pigment. For example, the primary particle size of the fine organic pigment is preferably not less than 10 nm, more preferably not less than 20 nm and even more preferably not less than 30 nm, and is also preferably not more than 90 nm, more preferably not more than 70 nm, even more preferably not more than 50 nm and further even more preferably not more than 45 nm.

In addition, the fine organic pigment obtained by the production process of the present invention has a smaller primary particle size than that of the raw material organic pigment. The ratio of the primary particle size of the fine organic pigment to the primary particle size of the raw material organic pigment (primary particle size of fine organic pigment/primary particle size of raw material organic pigment) may vary depending upon the primary particle size of the fine organic pigment to be produced, and is preferably not more than 0.55, more preferably not more than 0.50 and even more preferably not more than 0.45, and from the viewpoint of improving working efficiency, the ratio is also preferably not less than 0.1, more preferably not less than 0.2 and even more preferably not less than 0.3.

In addition, the primary particle size of the fine organic pigment may be suitably controlled by appropriately selecting the raw material organic pigment and adjusting amounts of the respective components compounded in the mixture to be kneaded and the kneading conditions such as kneading time.

Meanwhile, the primary particle size of the fine organic pigment, etc., is a number-average value measured by the method described in Examples below.

The fine organic pigment obtained by the production process of the present invention may be suitably used in the applications such as inks for ink-jet printing and color filters, as well as in the applications such as, for example, printing inks other than those for ink-jet printing, paints, colored resin molded articles and toners for development of electrostatic charge images. Of these applications, the fine organic pigment of the present invention is preferably used as inks for ink-jet printing.

With respect to the aforementioned embodiments, the present invention further provides the following aspects relating to the process for producing a fine organic pigment.

<1> A process for producing a fine organic pigment including the step of kneading a mixture prepared by compounding a raw material organic pigment, a water-soluble inorganic salt in the form of particles, a water-soluble organic solvent and a resin,
in which the resin is a copolymer produced by copolymerizing an aromatic ring-containing ethylenically unsaturated monomer (A), a carboxy group-containing ethylenically unsaturated monomer (B) and an ethylenically unsaturated monomer (C) containing a polyethyleneoxide chain having an average molar number of addition of ethyleneoxide of not less than 1 and not more than 50.

<2> The process for producing a fine organic pigment according to the aspect <1>, wherein the raw material organic pigment is preferably at least one pigment selected from the group consisting of condensed polycyclic pigments such as anthraquinone pigments, quinacridone pigments, indigo pigments, dioxazine pigments, perylene pigments, perinone pigments, isoindolinone pigments, isoindoline pigments, quinophthalone pigments and diketopyrrolopyrrole pigments, and azo pigments such as disazo pigments, benzimidazolone pigments and condensed azo pigments, more preferably at least one pigment selected from the group consisting of quinacridone pigments, diketopyrrolopyrrole pigments, disazo pigments and benzimidazolone pigments, and even more preferably quinacridone pigments.

<3> The process for producing a fine organic pigment according to the aspect <1> or <2>, wherein a primary particle size of the raw material organic pigment is preferably not more than 500 nm, more preferably not more than 300 nm and even more preferably not more than 150 nm, and is also preferably not less than 50 nm, more preferably not less than 60 nm and even more preferably not less than 70 nm.

<4> The process for producing a fine organic pigment according to any one of the aspects <1> to <3>, wherein the water-soluble inorganic salt is preferably a metal salt, more preferably at least one compound selected from the group consisting of a metal chloride and a metal sulfate, even more preferably a metal chloride, further even more preferably at least one compound selected from the group consisting of an alkali metal chloride and an alkali earth metal chloride and still further even more preferably an alkali metal chloride.

<5> The process for producing a fine organic pigment according to any one of the aspects <1> to <3>, wherein the water-soluble inorganic salt is preferably at least one compound selected from the group consisting of sodium chloride, potassium chloride, sodium sulfate, zinc chloride, calcium chloride and magnesium chloride, more preferably at least one compound selected from the group consisting of sodium chloride and sodium sulfate, and even more preferably sodium chloride.

<6> The process for producing a fine organic pigment according to any one of the aspects <1> to <5>, wherein the water-soluble organic solvent is preferably at least one solvent selected from the group consisting of diethylene glycol, propylene glycol, triethylene glycol and polyethylene glycol, and more preferably diethylene glycol.

<7> The process for producing a fine organic pigment according to any one of the aspects <1> to <6>, wherein the monomer (A) is preferably at least one monomer selected from the group consisting of phenoxyethyl (meth)acrylate, benzyl (meth)acrylate and styrene-based monomers such as styrene, $\alpha$-methyl styrene and vinyl toluene, more preferably at least one monomer selected from the group consisting of styrene and benzyl (meth)acrylate and even more preferably benzyl (meth)acrylate.

<8> The process for producing a fine organic pigment according to any one of the aspects <1> to <7>, wherein a content of the monomer (A) in whole monomers used in the copolymerization for production of the resin is preferably not less than 10% by mass, more preferably not less than 30% by mass, even more preferably not less than 40% by mass, further even more preferably not less than 45% by mass and still further even more preferably not less than 50% by mass, and is also preferably not more than 90% by mass, more preferably not more than 70% by mass, even more preferably not more than 65% by mass, further even more preferably not more than 60% by mass and still further even more preferably not more than 55% by mass.

<9> The process for producing a fine organic pigment according to any one of the aspects <1> to <8>, wherein the monomer (B) is preferably at least one monomer selected from the group consisting of acrylic acid, methacrylic acid, itaconic acid, crotonic acid, isocrotonic acid and maleic acid, more preferably at least one monomer selected from the group consisting of acrylic acid and methacrylic acid and even more preferably methacrylic acid.

<10> The process for producing a fine organic pigment according to any one of the aspects <1> to <9>, wherein a content of the monomer (B) in whole monomers used in the copolymerization for production of the resin is preferably not less than 5% by mass, more preferably not less than 10% by mass, even more preferably not less than 15% by mass and further even more preferably not less than 20% by mass, and is also preferably not more than 45% by mass, more preferably not more than 40% by mass, even more preferably not more than 35% by mass, further even more preferably not more than 30% by mass and still further even more preferably not more than 25% by mass.

<11> The process for producing a fine organic pigment according to any one of the aspects <1> to <10>, wherein an average molar number of addition of EO in the monomer (C) is not more than 50, preferably not more than 45, more preferably not more than 25, even more preferably not more than 10 and further even more preferably not more than 6, and is also not less than 1, preferably not less than 2 and more preferably not less than 3.

<12> The process for producing a fine organic pigment according to any one of the aspects <1> to <11>, wherein the monomer (C) is preferably a monomer represented by the following formula (1):

$$CH_2=C(R^1)\text{-}COO\text{-}(CH_2CH_2O)_n\text{-}R^2 \qquad (1)$$

wherein $R^1$ is a hydrogen atom or a methyl group; $R^2$ is a hydrogen atom, an alkyl group having not less than 1 and not more than 20 carbon atoms or a phenyl group; and n represents an average molar number of addition of ethyleneoxide and is a number of not less than 1 and not more than 50.

<13> The process for producing a fine organic pigment according to the aspect <12>, wherein in the formula (1), $R^1$ is preferably a methyl group.

<14> The process for producing a fine organic pigment according to the aspect <12> or <13>, wherein in the formula (1), $R^2$ is preferably an alkyl group having not less than 1 and not more than 20 carbon atoms, more preferably an alkyl group having not less than 1 and not more than 16 carbon atoms, even more preferably an alkyl group having not less than 1 and not more than 8 carbon atoms, further even more preferably a 2-ethylhexyl group or a methyl group, and still further even more preferably a methyl group.

<15> The process for producing a fine organic pigment according to any one of the aspects <12> to <14>, wherein in the formula (1), n is not more than 50, preferably not more than 45, more preferably not more than 25, even more preferably not more than 10 and further even more preferably not more than 6, and is also not less than 1, preferably not less than 2 and more preferably not less than 3.

<16> The process for producing a fine organic pigment according to any one of the aspects <1> to <15>, wherein the monomer (C) represented by the formula (1) is preferably at least one monomer selected from the group consisting of polyethylene glycol mono(meth)acrylate, methoxypolyethylene glycol mono(meth)acrylate, ethoxypolyethylene glycol mono(meth)acrylate, propoxypolyethylene glycol mono(meth)acrylate, butoxypolyethylene glycol mono(meth)acrylate, octoxypolyethylene glycol mono(meth)acrylate, stearoxypolyethylene glycol mono(meth)acrylate and phenoxypolyethylene glycol mono(meth)acrylate; more preferably at least one monomer selected from the group consisting of methoxypolyethylene glycol mono(meth)acrylate, ethoxypolyethylene glycol mono(meth)acrylate, propoxypolyethylene glycol mono(meth)acrylate, butoxypolyethylene glycol mono(meth)acrylate, octoxypolyethylene glycol mono(meth)acrylate and phenoxypolyethylene glycol mono(meth)acrylate; even more preferably at least one monomer selected from the group consisting of methoxypolyethylene glycol mono(meth)acrylate and ethoxypolyethylene glycol mono(meth)acrylate; and further even more preferably methoxypolyethylene glycol mono(meth)acrylate.

<17> The process for producing a fine organic pigment according to any one of the aspects <1> to <16>, wherein a content of the monomer (C) in whole monomers used in the copolymerization for production of the resin is preferably not less than 5% by mass, more preferably not less than 10% by mass, even more preferably not less than 15% by mass and further even more preferably not less than 20% by mass, and is also preferably not more than 45% by mass, more preferably not more than 40% by mass, even more preferably not more than 35% by mass and further even more preferably not more than 30% by mass.

<18> The process for producing a fine organic pigment according to any one of the aspects <1> to <17>, wherein an acid value of the resin is preferably not less than 50 mgKOH/g, more preferably not less than 70 mgKOH/g and even more preferably not less than 90 mgKOH/g, and is also preferably not more than 300 mgKOH/g, more preferably not more than 250 mgKOH/g, even more preferably not more than 200 mgKOH/g and further even more preferably not more than 180 mgKOH/g.

<19> The process for producing a fine organic pigment according to any one of the aspects <1> to <18>, wherein a weight-average molecular weight of the resin is preferably not less than 1,000, more preferably not less than 5,000, even more preferably not less than 10,000 and further even more preferably not less than 30,000, and is also preferably not more than 100,000, more preferably not more than 80,000 and even more preferably not more than 60,000.

<20> The process for producing a fine organic pigment according to any one of the aspects <1> to <19>, wherein a temperature of the mixture upon kneading is preferably not higher than 120°C, more preferably not higher than 100°C, even more preferably not higher than 80°C and further even more preferably not higher than 60°C, and is also preferably not lower than 20°C and more preferably not lower than 40°C.

<21> The process for producing a fine organic pigment according to any one of the aspects <1> to <20>, wherein a time of the kneading step is preferably not less than 0.5 hour, more preferably not less than 1 hour and even more preferably not less than 1.5 hours, and is also preferably not more than 15 hours, more preferably not more than 10 hours, even more preferably not more than 5 hours and further even more preferably not more than 3 hours.

<22> The process for producing a fine organic pigment according to any one of the aspects <1> to <21>, wherein after kneading the raw material organic pigment, the water-soluble inorganic salt in the form of particles and the water-soluble organic solvent with each other, the resin is added to the resulting kneaded material, followed by kneading the obtained mixture.

<23> The process for producing a fine organic pigment according to the aspect <22>, wherein a kneading time before adding the resin is preferably not less than 0.1 hour and more preferably not less than 0.3 hour, and is also preferably not more than 5 hours, more preferably not more than 3 hours and even more preferably not more than 1 hour.

<24> The process for producing a fine organic pigment according to the aspect <22> or <23>, wherein a kneading time after adding the resin is preferably not less than 0.4 hour and more preferably not less than 0.7 hour, and is also preferably not more than 10 hours, more preferably not more than 7 hours, even more preferably not more than 4 hours and further even more preferably not more than 2 hours.

<25> The process for producing a fine organic pigment according to any one of the aspects <1> to <24>, wherein an amount of the water-soluble inorganic salt compounded is preferably not less than 100 parts by mass, more preferably not less than 300 parts by mass and even more preferably not less than 400 parts by mass, and is also preferably not more than 3000 parts by mass, more preferably not more than 1000 parts by mass, even more preferably not more than 800 parts by mass and further even more preferably not more than 600 parts by mass, on the basis of 100 parts by mass of the raw material organic pigment.

<26> The process for producing a fine organic pigment according to any one of the aspects <1> to <25>, wherein an amount of the water-soluble organic solvent compounded is preferably not less than 10 parts by mass, more preferably not less than 50 parts by mass and even more preferably not less than 100 parts by mass, and is also preferably not more than 500 parts by mass, more preferably not more than 300 parts by mass, even more preferably not more than 200 parts by mass and further even more preferably not more than 150 parts by mass, on the basis of 100 parts by mass of the raw material organic pigment.

<27> The process for producing a fine organic pigment according to any one of the aspects <1> to <26>, wherein an amount of the resin compounded is preferably not less than 1 part by mass, more preferably not less than 3 parts by mass, even more preferably not less than 5 parts by mass and further even more preferably not less than 7 parts by mass, and is also preferably not more than 80 parts by mass, more preferably not more than 60 parts by mass, even more preferably not more than 40 parts by mass, further even more preferably not more than 20 parts by mass and still further even more preferably not more than 10 parts by mass, on the basis of 100 parts by mass of the raw material organic pigment.

<28> The process for producing a fine organic pigment according to any one of the aspects <1> to <27>, further including the step of subjecting a mixture obtained via the aforementioned kneading step to washing treatment with an aqueous solvent and then to filtration.

<29> The process for producing a fine organic pigment according to any one of the aspects <1> to <28>, wherein a primary particle size of the fine organic pigment is preferably not less than 10 nm, more preferably not less than 20 nm and even more preferably not less than 30 nm, and is also preferably not more than 90 nm, more preferably not more than 70 nm, even more preferably not more than 50 nm and further even more preferably not more than 45 nm.

<30> The process for producing a fine organic pigment according to any one of the aspects <1> to <29>, wherein a ratio of the primary particle size of the fine organic pigment to a primary particle size of the raw material organic pigment (primary particle size of fine organic pigment/primary particle size of raw material organic pigment) is preferably not more than 0.55, more preferably not more than 0.50 and even more preferably not more than 0.45, and is also preferably not less than 0.1, more preferably not less than 0.2 and even more preferably not less than 0.3.

<31> The process for producing a fine organic pigment according to any one of the aspects <1> to <30>, wherein a content of the monomer (A) in whole monomers used in the copolymerization for production of the resin is preferably not less than 10% by mass and not more than 90% by mass, a content of the monomer (B) in whole monomers used in the copolymerization for production of the resin is preferably not less than 5% by mass and not more than 45% by mass, and a content of the monomer (C) in whole monomers used in the copolymerization for production of the resin is preferably not less than 5% by mass and not more than 45% by mass.

EXAMPLES

In the following Synthesis Examples, Examples and Comparative Examples, the "part(s)" and "%" indicate "part(s) by mass" and "% by mass", respectively, unless otherwise specified.

(1) Measurement of Weight-Average Molecular Weights of Resin

The weight-average molecular weight of the resin was measured by gel permeation chromatography [GPC apparatus: "HLC-8120GPC" available from Tosoh Corporation; column: "TSK-GEL, $\alpha$-M" x 2 available from Tosoh Corporation; flow rate: 1 mL/minute)] using N,N-dimethyl formamide containing 60 mmol/L of phosphoric acid and 50 mmol/L of lithium bromide as a solvent, and using a monodisperse polystyrene having a known molecular weight as a reference standard substance.

(2) Measurement of Primary Particle Size of Pigment

A dispersion obtained by adding 0.05 g of pigment particles to 50 g of ethanol was treated using an ultrasonic cleaner "ASU CLEANER ASU-10M" (intensity: "high") available from AS ONE Corporation for 5 min. The resulting pigment dispersion was placed on a sampling table for a transmission electron microscope (TEM) and air-dried, and then photographed by TEM at a magnification of 10,000 to 100,000 times to obtain a micrographic image. From the thus obtained micrographic image, about 500 pigment particles were randomly sampled, and all of the thus sampled particles were measured for their major axis diameters to calculate a number-average value of the measured diameters which was defined as a primary particle size of the pigment.

Synthesis Examples 1 to 5 (Synthesis of Resin)

Resins a1 to a5 were produced as follows.

A reaction vessel equipped with a dropping funnel was charged with 50 parts by mass of methyl ethyl ketone and 0.36 part by mass of a chain transfer agent (2-mercaptoethanol) both based on 100 parts by mass of whole monomers to be charged, as well as 10% by mass of an amount of each of the monomers to be charged as shown in Table 1. The contents of the reaction vessel were mixed with each other, and then an inside atmosphere of the reaction vessel was fully replaced with a nitrogen gas to thereby obtain a mixed solution.

Separately, remaining 90% by mass of the amount of each of the monomers to be charged as shown in Table 1 was charged into a reaction vessel, and then 0.35 part by mass of the chain transfer agent (2-mercaptoethanol), 50 parts by mass of methyl ethyl ketone and 1.2 parts by mass of a radical polymerization initiator (2,2'-azobis(2,4-dimethylvaleronitrile)) were added thereto and then mixed with each other to obtain a mixed solution. The thus obtained mixed solution was placed in the dropping funnel, and an inside atmosphere of the dropping funnel was fully replaced with a nitrogen gas.

The mixed solution in the reaction vessel was heated to 75°C while stirring in a nitrogen atmosphere, and while maintaining the mixed solution in the reaction vessel at 75°C, the mixed solution in the dropping funnel was gradually added dropwise thereinto over 3.5 hours. After completion of the dropwise addition, the resulting mixed solution was maintained at a temperature of 65°C for 2 hours, and then a solution prepared by dissolving 0.3 part by mass of the radical polymerization initiator (2,2'-azobis(2,4-dimethylvaleronitrile)) in 5 parts by mass of methyl ethyl ketone was added to the mixed solution, and the resulting reaction solution was further aged at 75°C for 1.5 hours and further at 80°C for 1 hour to obtain a methyl ethyl ketone solution of each of the resins a1 to a5.

TABLE 1

|  |  | Synthesis Examples |  |  |  |  |
|---|---|---|---|---|---|---|
|  |  | 1 | 2 | 3 | 4 | 5 |
| Resins |  | a1 | a2 | a3 | a4 | a5 |
| Monomer (A) (part(s)) | Benzyl acrylate | 52 | 52 | 52 | 52 | 52 |
| Monomer (B) (part(s)) | Methacrylic acid | 23 | 23 | 23 | 23 | 48 |
| Monomer (C) (part(s)) | M-40G | 25 |  |  |  |  |
|  | M-230G |  | 25 |  |  |  |
|  | M-450G |  |  | 25 |  |  |
|  | M-900G |  |  |  | 25 |  |
| Average molar number of addition of EO |  | 4 | 23 | 45 | 90 | - |
| Weight-average molecular weight of resin |  | 41000 | 41000 | 41000 | 41000 | 44000 |

Meanwhile, the details of the monomers used herein are as follows.

M-40G: Methoxytetraethylene glycol methacrylate; in the formula (1), $R^1 = CH_3$, $R^2 = CH_3$, average molar number of addition of ethyleneoxide n = 4; "NK ESTER M-40G" available from Shin-Nakamura Chemical Co., Ltd.

M-230G: Methoxypolyethylene glycol methacrylate; in the formula (1), $R^1 = CH_3$, $R^2 = CH_3$, average molar number of addition of ethyleneoxide n = 23; "NK ESTER M-230G" available from Shin-Nakamura Chemical Co., Ltd.

M-450G: Methoxypolyethylene glycol methacrylate; in the formula (1), $R^1 = CH_3$, $R^2 = CH_3$, average molar number of addition of ethyleneoxide n = 45; "NK ESTER M-450G" available from Shin-Nakamura Chemical Co., Ltd.

M-900G: Methoxypolyethylene glycol methacrylate; in the formula (1), $R^1 = CH_3$, $R^2 = CH_3$, average molar number of addition of ethyleneoxide n = 90; "NK ESTER M-900G" available from Shin-Nakamura Chemical Co., Ltd.

[Example 1]

(Preparation of Resin Solution)

The methyl ethyl ketone solution of the resin a1 was placed under reduced pressure to remove a whole amount of methyl ethyl ketone therefrom, and diethylene glycol (guaranteed reagent) available from Wako Pure Chemical Industries, Ltd., was added to the resin, thereby obtaining a diethylene glycol solution b1 of the resin (40% by mass).

(Kneading Step)

A pressure-type kneader "TD0.5-3M Model" available from Toshin Co., Ltd., was charged with 127.6 g of PR122 (2,9-dimethyl quinacridone; "CFR002"; primary particle size; 91 nm) available from Dainichiseika Color & Chemicals Mfg. Co., Ltd., as a raw material organic pigment, 637.8 g (500 parts by weight on the basis of 100 parts by weight of the raw material organic pigment) of sodium chloride "Oshiomicron T-0" (average particle size: 10 μm) available from Ako Kasei Co., Ltd., as a water-soluble inorganic salt, and 156.8 g (123 parts by weight on the basis of 100 parts by weight of the raw material organic pigment) of diethylene glycol (guaranteed reagent) available from Wako Pure Chemical Industries, Ltd., as a water-soluble organic solvent, and the contents of the kneader were kneaded together at a rotating speed of 30 r/min for 0.5 hour while maintaining the contents of the kneader at a temperature of from 40 to 60°C. Furthermore, 26.3 g (8.25 parts by weight on the basis of 100 parts by weight of the raw material organic pigment) of the aforementioned solution b1 was added to the obtained kneaded material, and the resulting mixture was kneaded for 1 hour.

(Washing Step)

The aforementioned mixture obtained after the kneading was added to 3000 g of ion-exchanged water and stirred for 1 hour. The resulting dispersion was fed under a pressure of 0. 2 MPa into one filter chamber (filter chamber capacity: 763 cm$^3$; filtration area: 513 cm$^2$) of a filter press (Yabuta-type filter press) "ROUND TESTER YTO-8 Model" available from Yabuta Kikai Co., Ltd. Next, 50 L of ion-exchanged water was fed under a pressure of 0.2 MPa into the filter chamber to remove the water-soluble inorganic salt and water-soluble organic solvent from the dispersion, and then the resulting material was pressed under a pressure of 0.4 MPa to thereby obtain a pigment paste. The resulting pigment paste was dried at 70°C for 24 hours, and pulverized in an agate mortar to obtain a powder of a fine organic pigment having a kneading time of 1 hour.

Furthermore, the same step as described above was repeated except that the kneading time after adding the resin was changed to 2 hours, thereby obtaining a powder of a fine organic pigment having a kneading time of 2 hours.

[Example 2]

(Preparation of Resin Solution)

The methyl ethyl ketone solution of the resin a2 was placed under reduced pressure to remove a whole amount of methyl ethyl ketone therefrom, and diethylene glycol (guaranteed reagent) available from Wako Pure Chemical Industries, Ltd., was added to the resin, thereby obtaining a diethylene glycol solution b2 of the resin (40% by mass).

(Kneading Step and Washing Step)

The subsequent procedure was conducted in the same manner as in Example 1 except that the solution b1 added to the pressure-type kneader was replaced with the solution b2, thereby obtaining a powder of a fine organic pigment.

[Example 3]

(Preparation of Resin Solution)

The methyl ethyl ketone solution of the resin a3 was placed under reduced pressure to remove a whole amount of methyl ethyl ketone therefrom, and diethylene glycol (guaranteed reagent) available from Wako Pure Chemical Industries, Ltd., was added to the resin, thereby obtaining a diethylene glycol solution b3 of the resin (40% by mass).

(Kneading Step and Washing Step)

The subsequent procedure was conducted in the same manner as in Example 1 except that the solution b1 added to the pressure-type kneader was replaced with the solution b3, thereby obtaining a powder of a fine organic pigment.

[Comparative Example 1]

(Preparation of Resin Solution)

The methyl ethyl ketone solution of the resin a4 was placed under reduced pressure to remove a whole amount of methyl ethyl ketone therefrom, and diethylene glycol (guaranteed reagent) available from Wako Pure Chemical Industries, Ltd., was added to the resin, thereby obtaining a diethylene glycol solution b4 of the resin (40% by mass).

(Kneading Step and Washing Step)

The subsequent procedure was conducted in the same manner as in Example 1 except that the solution b1 added to the pressure-type kneader was replaced with the solution b4, thereby obtaining a powder of a fine organic pigment.

[Comparative Example 2]

(Preparation of Resin Solution)

The methyl ethyl ketone solution of the resin a5 was placed under reduced pressure to remove a whole amount of methyl ethyl ketone therefrom, and diethylene glycol (guaranteed reagent) available from Wako Pure Chemical Industries, Ltd., was added to the resin, thereby obtaining a diethylene glycol solution b5 of the resin (40% by mass).

(Kneading Step and Washing Step)

The subsequent procedure was conducted in the same manner as in Example 1 except that the solution b1 added to the pressure-type kneader was replaced with the solution b5, thereby obtaining a powder of a fine organic pigment.

[Comparative Example 3]

(Preparation of Resin Solution)

"JONCRYL 68" (styrene-acrylic copolymer; acid value: 195 mgKOH/g; molecular weight: 13,000) available from BASF Japan, Ltd., was dissolved in diethylene glycol (guaranteed reagent) available from Wako Pure Chemical Industries, Ltd., thereby obtaining a diethylene glycol solution b6 of the resin (40% by mass).

(Kneading Step and Washing Step)

The subsequent procedure was conducted in the same manner as in Example 1 except that the solution b1 added to the pressure-type kneader was changed to the solution b6, thereby obtaining a powder of a fine organic pigment.

[Comparative Example 4]

(Kneading Step and Washing Step)

The same kneading step as in Example 1 was repeated except that the kneading was conducted for 1.5 hours without adding the solution b1 to the pressure-type kneader, thereby obtaining a powder of a fine organic pigment.
The measurement results of the fine organic pigments obtained in Examples 1 to 3 and Comparative Examples 1 to 4 are shown in Table 2.

TABLE 2

| | | Examples | | | Comparative Examples | | | |
|---|---|---|---|---|---|---|---|---|
| | | 1 | 2 | 3 | 1 | 2 | 3 | 4 |
| Resin solutions | | b1 | b2 | b3 | b4 | b5 | b6 | - |
| Primary particle size (nm) | Kneading time: 1 hour | 46.9 | 47.2 | 48.9 | 52.1 | 57.1 | 52.1 | 59.0 |
| | Kneading time: 2 hours | 40.3 | 40.7 | 42.0 | 48.5 | 50.3 | 48.8 | 51.1 |
| Ratio between primary particle sizes*1 | Kneading time: 1 hour | 0.52 | 0.52 | 0.54 | 0.57 | 0.63 | 0.57 | 0.65 |
| | Kneading time: 2 hours | 0.44 | 0.45 | 0.46 | 0.53 | 0.55 | 0.54 | 0.56 |
| Note *1: Ratio between primary particle sizes = (primary particle size of fine organic pigment)/(primary particle size of raw material organic pigment) | | | | | | | | |

From Table 2, it was confirmed that in Examples 1 to 3 in which the fine organic pigments were obtained by conducting the kneading in the presence of the resin as the copolymer produced by copolymerizing the aromatic ring-containing ethylenically unsaturated monomer (A), the carboxy group-containing ethylenically unsaturated monomer (B) and the ethylenically unsaturated monomer (C) containing a polyethyleneoxide chain having an average molar number of addition of EO of not less than 1 and not more than 50, it was possible to efficiently atomize the raw material organic pigment and therefore achieve high productivity of the fine organic pigment even though the kneading time was short, as compared to Comparative Examples 1 to 4.

INDUSTRIAL APPLICABILITY

The present invention provides a useful process for producing a fine organic pigment that is usable in the applications such as inks for ink-jet printing and color filters.

**Claims**

1.  A process for producing a fine organic pigment comprising the step of kneading a mixture prepared by compounding a raw material organic pigment, a water-soluble inorganic salt in the form of particles, a water-soluble organic solvent and a resin,
    in which the resin is a copolymer produced by copolymerizing an aromatic ring-containing ethylenically unsaturated monomer (A), a carboxy group-containing ethylenically unsaturated monomer (B) and an ethylenically unsaturated monomer (C) comprising a polyethyleneoxide chain having an average molar number of addition of ethyleneoxide of not less than 1 and not more than 50.

2.  The process for producing a fine organic pigment according to claim 1, wherein the raw material organic pigment, the water-soluble inorganic salt in the form of particles and the water-soluble organic solvent are first kneaded, and then the resin is added to the resulting kneaded material, followed by further kneading the resulting mixture.

3.  The process for producing a fine organic pigment according to claim 2, wherein a time of the kneading before adding the resin is not less than 0.1 hour and not more than 5 hours.

4.  The process for producing a fine organic pigment according to claim 2 or 3, wherein a time of the kneading after adding the resin is not less than 0.4 hour and not more than 10 hours.

5.  The process for producing a fine organic pigment according to any one of claims 1 to 4, wherein an amount of the resin compounded is not less than 1 part by mass and not more than 80 parts by mass on the basis of 100 parts by mass of the raw material organic pigment.

6.  The process for producing a fine organic pigment according to any one of claims 1 to 5, wherein the monomer (A) is preferably at least one monomer selected from the group consisting of phenoxyethyl (meth)acrylate, benzyl (meth)acrylate and a styrene-based monomer.

7.  The process for producing a fine organic pigment according to any one of claims 1 to 6, wherein the monomer (B) is at least one monomer selected from the group consisting of acrylic acid, methacrylic acid, itaconic acid, crotonic acid, isocrotonic acid and maleic acid.

8.  The process for producing a fine organic pigment according to any one of claims 1 to 7, wherein the monomer (C) is a monomer represented by the following formula (1):

    $$CH_2=C(R^1)\text{-}COO\text{-}(CH_2CH_2O)_n\text{-}R^2 \qquad (1)$$

    wherein $R^1$ is a hydrogen atom or a methyl group; $R^2$ is a hydrogen atom, an alkyl group having not less than 1 and not more than 20 carbon atoms or a phenyl group; and n represents an average molar number of addition of ethyleneoxide and is a number of not less than 1 and not more than 50.

9.  The process for producing a fine organic pigment according to any one of claims 1 to 8, wherein a content of the monomer (A) in whole monomers used in the copolymerization for production of the resin is not less than 10% by mass and not more than 90% by mass.

10. The process for producing a fine organic pigment according to any one of claims 1 to 9, wherein a content of the monomer (B) in whole monomers used in the copolymerization for production of the resin is not less than 5% by mass and not more than 45% by mass.

11. The process for producing a fine organic pigment according to any one of claims 1 to 10, wherein a content of the monomer (C) in whole monomers used in the copolymerization for production of the resin is not less than 5% by mass and not more than 45% by mass.

12. The process for producing a fine organic pigment according to any one of claims 1 to 11, wherein an acid value of the resin is not less than 50 mgKOH/g and not more than 300 mgKOH/g.

13. The process for producing a fine organic pigment according to any one of claims 1 to 12, wherein a weight-average molecular weight of the resin is not less than 1,000 and not more than 100,000.

14. The process for producing a fine organic pigment according to any one of claims 1 to 13, wherein a ratio of a primary particle size of the fine organic pigment produced to a primary particle size of the raw material organic pigment (primary particle size of fine organic pigment/primary particle size of raw material organic pigment) is not less than 0.1 and not more than 0.55.

15. A use of the fine organic pigment produced by the process for producing a fine organic pigment according to any one of claims 1 to 14, for an ink for ink-jet printing.

**Patentansprüche**

1. Verfahren zur Herstellung eines feinen organischen Pigments, umfassend den Schritt des Knetens einer Mischung, hergestellt durch Mischen eines organischen Rohmaterialpigments, eines wasserlöslichen anorganischen Salzes in Form von Partikeln, eines wasserlöslichen organischen Lösungsmittels und eines Harzes, wobei das Harz ein Copolymer ist, das durch Copolymerisation eines ethylenisch ungesättigten Monomers (A), das einen aromatischen Ring enthält, eines ethylenisch ungesättigten Monomers (B), das eine Carboxygruppe enthält, und eines ethylenisch ungesättigten Monomers (C), das eine Polyethylenoxidkette mit einer durchschnittlichen Molzahl der Ethylenoxidaddition von nicht weniger als 1 und nicht mehr als 50 umfasst, hergestellt ist.

2. Verfahren zur Herstellung eines feinen organischen Pigments gemäß Anspruch 1, wobei zuerst das organische Rohmaterialpigment, das wasserlösliche anorganische Salz in Form von Partikeln und das wasserlösliche organische Lösungsmittel geknetet werden, und dann das Harz zu dem resultierenden gekneteten Material hinzugefügt wird, gefolgt von weiterem Kneten der resultierenden Mischung.

3. Verfahren zur Herstellung eines feinen organischen Pigments gemäß Anspruch 2, wobei die Zeit des Knetens vor der Zugabe des Harzes nicht weniger als 0,1 Stunden und nicht mehr als 5 Stunden beträgt.

4. Verfahren zur Herstellung eines feinen organischen Pigments gemäß Anspruch 2 oder 3, wobei die Zeit des Knetens nach der Zugabe des Harzes nicht weniger als 0,4 Stunden und nicht mehr als 10 Stunden beträgt.

5. Verfahren zur Herstellung eines feinen organischen Pigments gemäß einem der Ansprüche 1 bis 4, wobei eine Menge des zugemischten Harzes nicht weniger als 1 Massenteil und nicht mehr als 80 Massenteile bezogen auf 100 Massenteile des organischen Rohmaterialpigments beträgt.

6. Verfahren zur Herstellung eines feinen organischen Pigments gemäß einem der Ansprüche 1 bis 5, wobei das Monomer (A) bevorzugt mindestens ein Monomer ist, das aus der Gruppe bestehend aus Phenoxyethyl(meth)acrylat, Benzyl(meth)acrylat, und einem Styrol-basierten Monomer ausgewählt ist.

7. Verfahren zur Herstellung eines feinen organischen Pigments gemäß einem der Ansprüche 1 bis 6, wobei das Monomer (B) mindestens ein Monomer ist, das aus der Gruppe bestehend aus Acrylsäure, Methacrylsäure, Itaconsäure, Crotonsäure, Isocrotonsäure und Maleinsäure ausgewählt ist.

8. Verfahren zur Herstellung eines feinen organischen Pigments gemäß einem der Ansprüche 1 bis 7, wobei das Monomer (C) ein durch die folgende Formel (1) dargestelltes Monomer (C) ist:

$$CH_2=C(R^1)\text{-}COO\text{-}(CH_2CH_2O)_n\text{-}R^2 \qquad (1)$$

wobei $R^1$ ein Wasserstoffatom oder eine Methylgruppe ist; $R^2$ ein Wasserstoffatom, eine Alkylgruppe mit nicht weniger als 1 und nicht mehr als 20 Kohlenstoffatomen oder eine Phenylgruppe ist; und n eine durchschnittliche Molzahl der Ethylenoxidaddition darstellt und eine Zahl von nicht weniger als 1 und nicht mehr als 50 ist.

9. Verfahren zur Herstellung eines feinen organischen Pigments gemäß einem der Ansprüche 1 bis 8, wobei ein Gehalt des Monomers (A) in den gesamten Monomeren, die in der Copolymerisation zur Herstellung des Harzes verwendet werden, nicht weniger als 10 Massen-% und nicht mehr als 90 Massen-% beträgt.

10. Verfahren zur Herstellung eines feinen organischen Pigments gemäß einem der Ansprüche 1 bis 9, wobei ein Gehalt des Monomers (B) in den gesamten Monomeren, die in der Copolymerisation zur Herstellung des Harzes verwendet werden, nicht weniger als 5 Massen-% und nicht mehr als 45 Massen-% beträgt.

**11.** Verfahren zur Herstellung eines feinen organischen Pigments gemäß einem der Ansprüche 1 bis 10, wobei ein Gehalt des Monomers (C) in den gesamten Monomeren, die in der Copolymerisation zur Herstellung des Harzes verwendet werden, nicht weniger als 5 Massen-% und nicht mehr als 45 Massen-% beträgt.

**12.** Verfahren zur Herstellung eines feinen organischen Pigments gemäß einem der Ansprüche 1 bis 11, wobei eine Säurezahl des Harzes nicht weniger als 50 mgKOH/g und nicht mehr als 300 mgKOH/g beträgt.

**13.** Verfahren zur Herstellung eines feinen organischen Pigments gemäß einem der Ansprüche 1 bis 12, wobei das gewichtsgemittelte Molekulargewicht des Harzes nicht weniger als 1.000 und nicht mehr als 100.000 beträgt.

**14.** Verfahren zur Herstellung eines feinen organischen Pigments gemäß einem der Ansprüche 1 bis 13, wobei ein Verhältnis einer Primärteilchengröße des hergestellten feinen organischen Pigments zu einer Primärteilchengröße des organischen Rohmaterialpigments (Primärteilchengröße des feinen organischen Pigments/Primärteilchengröße des organischen Rohmaterialpigments) nicht weniger als 0,1 und nicht mehr als 0,55 beträgt.

**15.** Verwendung des feinen organischen Pigments, das durch ein Verfahren zur Herstellung eines feinen organischen Pigments gemäß einem der Ansprüche 1 bis 14 hergestellt ist, für eine Tinte zum Tintenstrahldruck.

**Revendications**

**1.** Procédé de production d'un pigment organique fin comprenant l'étape de malaxage d'un mélange préparé par composition d'une matière première de pigment organique, un sel inorganique hydrosoluble sous la forme de particules, un solvant organique hydrosoluble et une résine,
dans lequel la résine est un copolymère produit par copolymérisation d'un monomère insaturé éthyléniquement (A) contenant un cycle aromatique, un monomère insaturé éthyléniquement (B) contenant un groupe carboxy et un monomère insaturé éthyléniquement (C) comprenant une chaîne d'oxyde de polyéthylène présentant un nombre moyen de moles d'addition d'oxyde d'éthylène non inférieur à 1 et non supérieur à 50.

**2.** Procédé de production d'un pigment organique fin selon la revendication 1, dans lequel la matière première de pigment organique, le sel inorganique hydrosoluble sous la forme de particules et le solvant organique hydrosoluble sont tout d'abord malaxés, puis la résine est ajoutée à la matière malaxée obtenue, suivie par un autre malaxage du mélange obtenu.

**3.** Procédé de production d'un pigment organique fin selon la revendication 2, dans lequel une durée du malaxage avant l'addition de la résine n'est pas inférieure à 0,1 heure et pas supérieure à 5 heures.

**4.** Procédé de production d'un pigment organique fin selon la revendication 2 ou 3, dans lequel une durée du malaxage après l'addition de la résine n'est pas inférieure à 0,4 heure et pas supérieure à 10 heures.

**5.** Procédé de production d'un pigment organique fin selon l'une quelconque des revendications 1 à 4, dans lequel une quantité de la résine composée n'est pas inférieure à 1 partie en masse et pas supérieure à 80 parties en masse sur la base de 100 parties en masse de la matière première de pigment organique.

**6.** Procédé de production d'un pigment organique fin selon l'une quelconque des revendications 1 à 5, dans lequel le monomère (A) est de préférence au moins un monomère choisi dans le groupe constitué par le (méth)acrylate de phénoxyéthyle, le (méth)acrylate de benzyle et un monomère à base de styrène.

**7.** Procédé de production d'un pigment organique fin selon l'une quelconque des revendications 1 à 6, dans lequel le monomère (B) est au moins un monomère choisi dans le groupe constitué par l'acide acrylique, l'acide méthacrylique, l'acide itaconique, l'acide crotonique, l'acide isocrotonique et l'acide maléique.

**8.** Procédé de production d'un pigment organique fin selon l'une quelconque des revendications 1 à 7, dans lequel le monomère (C) est un monomère représenté par la formule (1) suivante :

$$CH_2=C(R^1)\text{-}COO\text{-}(CH_2CH_2O)_n\text{-}R^2 \qquad (1)$$

dans laquelle $R^1$ est un atome d'hydrogène ou un groupe méthyle ; $R^2$ est un atome d'hydrogène, un groupe alkyle ne présentant pas moins de 1 et pas plus de 20 atomes de carbone ou un groupe phényle ; et n représente un nombre moyen de moles d'addition d'oxyde d'éthylène et est un nombre non inférieur à 1 et non supérieur à 50.

9. Procédé de production d'un pigment organique fin selon l'une quelconque des revendications 1 à 8, dans lequel une teneur du monomère (A) dans des monomères entiers utilisés dans la copolymérisation pour la production de la résine n'est pas inférieure à 10 % en masse et pas supérieure à 90 % en masse.

10. Procédé de production d'un pigment organique fin selon l'une quelconque des revendications 1 à 9, dans lequel une teneur du monomère (B) dans des monomères entiers utilisés dans la copolymérisation pour la production de la résine n'est pas inférieure à 5 % en masse et pas supérieure à 45 % en masse.

11. Procédé de production d'un pigment organique fin selon l'une quelconque des revendications 1 à 10, dans lequel une teneur du monomère (C) dans des monomères entiers utilisés dans la copolymérisation pour la production de la résine n'est pas inférieure à 5 % en masse et pas supérieure à 45 % en masse.

12. Procédé de production d'un pigment organique fin selon l'une quelconque des revendications 1 à 11, dans lequel une valeur acide de la résine n'est pas inférieure à 50 mgKOH/g et pas supérieure à 300 mgKOH/g.

13. Procédé de production d'un pigment organique fin selon l'une quelconque des revendications 1 à 12, dans lequel un poids moléculaire moyen en poids de la résine n'est pas inférieur à 1 000 et pas supérieur à 100 000.

14. Procédé de production d'un pigment organique fin selon l'une quelconque des revendications 1 à 13, dans lequel un rapport d'une taille de particule primaire du pigment organique fin produit à une taille de particule primaire de la matière première de pigment organique (taille de particule primaire de pigment organique fin/taille de particule primaire de matière première de pigment organique) n'est pas inférieur à 0,1 et pas supérieur à 0,55.

15. Utilisation du pigment organique fin produit par le procédé de production d'un pigment organique fin selon l'une quelconque des revendications 1 à 14, pour une encre pour impression à jet d'encre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009256615 A
- JP 2009084302 A
- WO 2014185471 A
- EP 2998364 A1
- WO 2014185473 A
- EP 2998365 A1
- US 20060052480 A
- WO 2014185475 A
- US 2016090483 A
- JP 2012025890 A
- JP 2012025920 A
- US 20120165437 A